# EUROPÄISCHE PATENTSCHRIFT

(11) **EP 1 883 490 B1**
(45) Veröffentlichungstag und Bekanntmachung des Hinweises auf die Patenterteilung: **19.08.2009**
(21) Anmeldenummer: 06742371.5
(22) Anmeldetag: 17.05.2006
(51) Int. Cl.: B23K 9/32

(54) **VERFAHREN ZUM ENTFERNEN VON SCHWEISSSPRITZERN UND ÄHNLICHEN VERUNREINIGUNGEN AN SCHWEISSBRENNERN UND VORRICHTUNG ZUR DURCHFÜHRUNG DES VERFAHRENS**
METHOD FOR REMOVING WELDING SPATTER AND SIMILAR SOILING FROM WELDING TORCHES AND DEVICE FOR CARRYING OUT THE METHOD
PROCÉDÉ D'ÉLIMINATION D'ÉCLABOUSSURES DE MÉTAL ET D'IMPURETÉS ANALOGUES SUR UN CHALUMEAU DE SOUDAGE ET DISPOSITIF PERMETTANT LA MISE EN OEUVRE DUDIT PROCÉDÉ

(30) Priorität: 19.05.2005 DE 102005024315; 11.05.2006 DE 102006021908
(43) Veröffentlichungstag der Anmeldung: 06.02.2008
(73) Patentinhaber: TBI Industries GmbH, 35643 Fernwald/Steinbach (DE)
(72) Erfinder: BÜRKNER, Gunnar, 01324 Dresden (DE); HERBER, Wolfgang, 35305 Grünberg-Weickartshaim (DE)
(74) Vertreter: Zieger, Sieglinde
(86) Internationale Anmeldenummer: PCT/DE2006/000892
(87) Internationale Veröffentlichungsnummer: WO 2006/122544

(56) Entgegenhaltungen:
- US-A- 6 034 351
- US-A1- 2004 050 834

## Beschreibung

Das Beseitigen von Schweißspritzern an Schweißbrennern erfolgt bekannter Weise mechanisch. So sind aus DE 199 12 283 A1 und DE 103 19 261 A1 derartige Vorrichtungen bekannt. Beide Vorrichtungen setzen zum Entfernen von Schweißspritzern Schneidwerkzeuge ein, die nach DE 103 19 261 A1 in die Spitze des Schweißbrenners hineinfahren und nach DE 199 12 283 A1 bereits im Schweißbrenner vorgesehen sind. Die letzte der beiden bekannten Lösungen eignet sich besonders für Automatenschweißbrenner. Die Schneidwerkzeuge sind Fräser, die unter Rotation die anhaftenden Verunreinigungen abkratzen. Das Abkratzen hat zur Folge, dass es sich nicht vermeiden lässt, neben der gewollten Beseitigung der Verunreinigungen auch die Innenflächen der Gasdüse, sowie Stromdüse und Isolationsteile im Kopf des Schweißbrenners zu beschädigen. Die Vorrichtung zum Reinigen einer Gasdüse nach DE 103 19 261 A1 wird unterstützt durch die Anordnung einer Sprühvorrichtung, die die gereinigte Gasdüse und die gereinigte Stromdüse mit Antihaftmittel benetzen, um eine erneute Verschmutzung zu verzögern. In DE 10 2004 012 609 B4 ist ein Verfahren und eine Vorrichtung zum Durchführen des Verfahrens offenbart, indem als Reinigungsmittel Strahlmittel eingesetzt werden und als Träger für das Strahlmittel Druckluft oder Kohlendioxid eingesetzt wird. Das Strahlmittel muss kalt sein und zur Durchführung des Verfahrens ist eine Temperaturdifferenz zwischen Strahlmittel und den zu reinigenden Brennerteilen von > 80 K notwendig. Das Strahlmittel ist Trockeneis oder Kohlendioxidschnee oder Trockeneis-Pellets und kann auch ein Gemisch aus diesen sein. Nachteilig sind hier Kondensationsprobleme und das Einbringen von Feuchtigkeit in den Kopf des Schweißbrenners, also Verfahrensbedingungen, die beim nachträglichen Schweißen zur Beeinträchtigung der Schweißnahtqualität führen.

Die Erfindung stellt sich vor diesem Hintergrund die Aufgabe, eine Lösung zur Beseitigung von Schweißspritzern und ähnlichen Verunreinigungen in einem Schweißbrennerkopf zu entwickeln, die unabhängig von einer Temperaturdifferenz zwischen Teilen des Schweißbrenners und dem Reinigungsmittel ist und Beschädigungen von Gas- und Stromdüse am Schweißbrenner weitestgehend vermeidet.

Die Aufgabe der Erfindung wird mit dem Einsatz eines körnigen Schleifmittels gelöst, welches unter rotierender und/oder schwenkender Bewegung und hohem Druck in den Kopf des Schweißbrenners eingeblasen, besser eingestrahlt, wird. Die Bewegungsenergie des körnigen Schleifmittels ist dabei so groß, dass anhaftende Schweißspritzer abgeschlagen werden. Die Vorrichtung zur Durchführung des Verfahrens besteht aus einem Gehäuse in dem in einer Halterung eine Strahldüse so angeordnet, dass sie um eine gedachte Achse rotierend und/oder schwenkend bewegt wird. Die Bewegungsform der Halterung mit der Strahldüse kann auch beliebig elliptisch und/oder pendelnd sein. Dabei ist die Bewegung motorgesteuert. An der Strahldüse ist ein Injektor für die dosierte Druckluftzufuhr angeordnet. Der Injektor ist weiter mit einer Ansaugleitung für das körnige Schleifmittel fest verbunden. Alle genannten Teile sind innerhalb des Gehäuses angeordnet. Oben ist das Gehäuse mit einer Sicherheitsklappe verschlossen, die mittig eine Öffnung für den Schweißbrennerkopf aufweist. Wenn der Schweißbrenner in die Sicherheitsklappe eingeführt ist, legt sich eine Abdichtung um die Öffnung in der Sicherheitsklappe und gewährleistet so die Formschlüssigkeit. Das von der Druckluft getragene körnige Schleifmittel, z. B. kleinkörniger Korund, wird mit Druck und der unterstützenden Bewegung in den Schweißbrennerkopf geblasen und schlägt die anhaftenden Schweißspritzer oder anderen Verunreinigungen ab. Gleichzeitig wird die innere Oberfläche des Schweißbrennerkopfes blank gestrahlt. Die abgeschlagenen Verunreinigungen fallen bei entsprechender Größe zu Boden, die staubförmigen Verunreinigungen verteilen sich in der umgebenden Luft. Der Boden des Gehäuses ist schräg verlaufend und endet in einem Trichter. Der Trichter bildet die Verbindung zwischen dem Gehäuse und einem zweiten Gehäuse mit einem Vorratsbehälter für das körnige Schleifmittel. Durch den Trichter fallen die Verunreinigungen und unverbrauchtes körniges Schleifmittel auf ein Sieb, durch das das körnige Schleifmittel zurück in den Vorratsbehälter fällt und die Verunreinigungen vom Sieb aus dem System entfernt werden. Die mit dem Injektor verbundene Ansaugleitung für das körnige Schleifmittel ist auf der anderen Seite mit dem Vorratsbehälter für das körnige Schleifmittel verbunden. Die Erfindung wird anhand von Zeichnungen näher erläutert. Dabei zeigen:

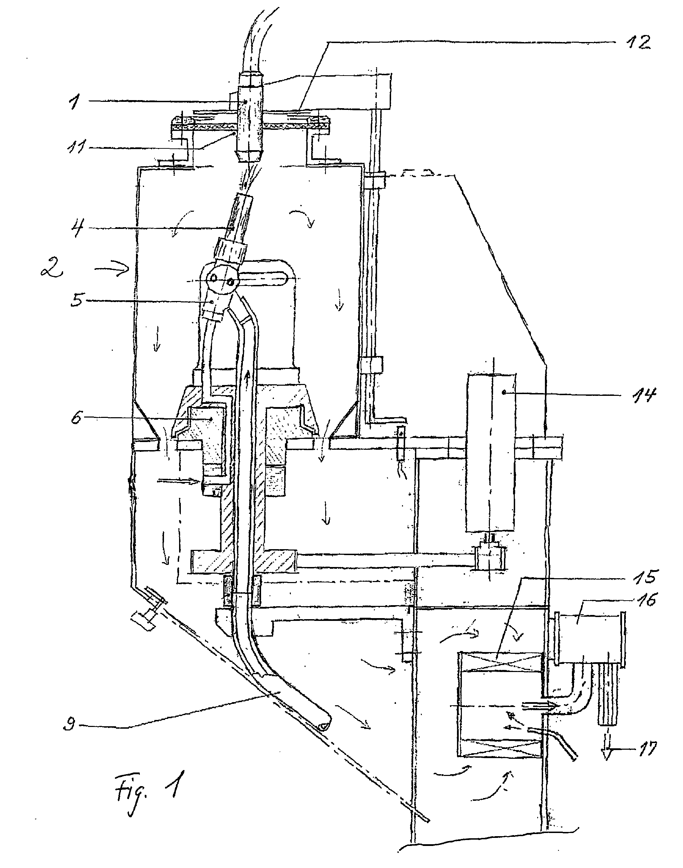

- Fig. 1: Gehäuse mit Schweißbrenner und Strahldüse

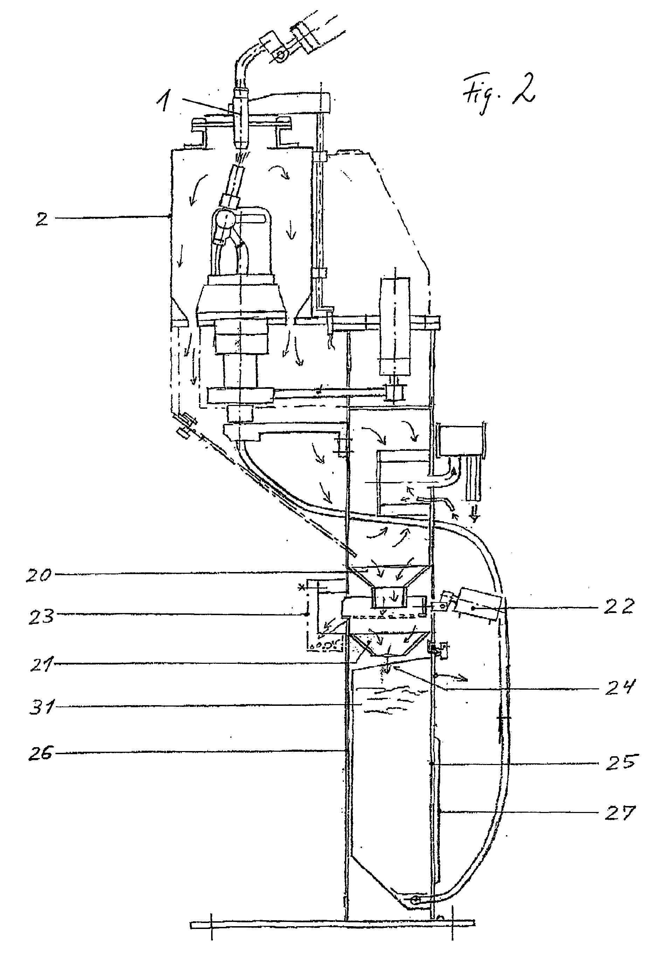

- Fig. 2: gesamte Vorrichtung

Ein Gehäuse 2 ist oben mit einer Öffnung versehen, die mit einer Sicherheitsklappe 12, die schwenkbar angeordnet ist, verschlossen wird. In der Sicherheitsklappe 12 ist eine Öffnung zur Aufnahme des Schweißbrenners 1 vorgesehen, wobei der Schweißbrenner 1 in der Öffnung der Sicherheitsklappe 12 formschlüssig von einer Abdichtung 11 umgeben ist. Im Gehäuse 2 ist weiter eine Halterung 6 zentrisch, unter der Öffnung zur Aufnahme des Schweißbrenners 1, angeordnet. In der Halterung 6 ist eine Strahldüse 4, die fest mit einem Injektor 5 verbunden ist, um 360° drehbar angeordnet. Die Halterung 6 ist weiter fest mit einem Motor 14 verbunden, der bei Funktion der Vorrichtung diese ununterbrochen dreht. Mit Injektor 5 wird Druckluft in die Strahldüse 4 geblasen. Injektor 5 ist weiter mit der Ansaugleitung 9 für das körnige Schleifmittel 31 verbunden. Die Ansaugleitung 9 für das körnige Schleifmittel reicht in den Vorratsbehälter 25. Im unteren Bereich von Gehäuse 2 ist ein Staubfilter 15 angeordnet, der über eine Öffnung in der Seitenwand von Gehäuse 2 mit einer Absaugvorrichtung 16 formschlüssig verbunden ist. Eine Außenwand von Gehäuse 2 verläuft nach unten schräg und reduziert den Durchmesser der unteren Öffnung von Gehäuse 2. Die untere Öffnung von Gehäuse 2 endet so in einem Trichter 20. Der Trichter 20 sitzt formschlüssig auf einem zweiten Gehäuse 26. Am zweiten Gehäuse 26 ist die Öffnung unter dem Trichter 20 als ein Sieb 22 ausgeführt. Unterhalb von Sieb 22 ist ein Sammelbehälter 23 angeordnet. Im zweiten Gehäuse 26 ist weiter der Vorratsbehälter 25 für das körnige Schleifmittel 31 angeordnet und in Höhe des Vorratsbehälters 25 eine Sichtscheibe 27. Der Vorratsbehälter 25 ist dabei so angeordnet, dass er dem zweiten Gehäuse 26 separat entnommen werden kann. Zwischen Sieb 22 und Vorratsbehälter 25 ist ein weiterer Trichter 21 angeordnet. Wird die Vorrichtung zum Entfernen von Schweißspritzern und ähnlichen Verunreinigungen an Schweißbrennern in Funktion versetzt, ist der Schweißbrenner 1 in die Sicherheitsklappe 12 eingeführt und mittels Abdichtung 11 formschlüssig nach außen verschlossen. Halterung 6 wird über Motor 14 in Rotation versetzt und mit der Halterung 6 Injektor 5 und die Strahldüse 4. Injektor 5 ist an die Druckluft angeschlossen und saugt über die Ansaugleitung 9 körniges Schleifmittel 31 in den Injektor 5. Injektor 5 mischt Druckluft und körniges Schleifmittel 31 und leitet das Gemisch in die Strahldüse 4. Strahldüse 4 fährt an den Kopf von Schweißbrenner 1 und bläst das körnige Schleifmittel 31 in den Kopf hinein. Durch die Kombination von Druck und Rotationsbewegung nimmt das körnige Schleifmittels 31 ausreichend Energie auf, um die anhaftenden Verunreinigungen an der Gasdüse und Stromdüse im Kopf des Schweißbrenners 1 abschlagen zu können. Die abgeschlagenen Verunreinigungen fallen zum Boden von Gehäuse 2 und werden durch die Schräge in den Trichter 20 geleitet. Von Trichter 20 fallen die Verunreinigungen auf das Sieb 22 und werden vom Sieb 22 im Sammelbehälter 23 aufgefangen und dem System entzogen. Mit den abgeschlagenen Verunreinigungen fällt auch unverbrauchtes körniges Schleifmittel 31 auf und durch das Sieb 22 in den Vorratsbehälter 25 zurück. Staubförmige Verunreinigungen werden vom Staubfilter 15 aufgenommen und mittels Absaugvorrichtung 16 aus dem System entfernt. Die Vorrichtung nach der Erfindung ist transportabel und kann auch an die Schweißbrenner herangeführt werden. Die Vorrichtung ist selbstverständlich auch zum Entfernen von Schweißspritzern und ähnlichen Verunreinigungen an Schneidbrennern geeignet. Der Aufbau der Vorrichtung und die Verfahrensweise sind gleich, deswegen kann auf eine detaillierte Beschreibung verzichtet werden.

Halterung 6 kann mit der gleichen Anordnung auch in eine schwenkende oder elliptisch verlaufende Bewegung versetzt werden und damit kann auch Strahldüse 4 unter schwenkender oder elliptisch verlaufender Bewegung des körnigen Schleifmittels 31 den Kopf des Schweißbrenners oder Schneidbrenners reinigen.

Ein weiterer positiver Effekt des Verfahrens nach der Erfindung ist die gleichzeitig polierende Wirkung des Korunds für die Oberflächen der gereinigten Gas- und Stromdüse im Schweiß-oder Schneidbrenner. Die blanken Oberflächen verzögern das erneute Anhaften von Schweißspritzern oder ähnlichen Verunreinigungen ohne den Einsatz eines zusätzlichen Antihaftmittels.

Das Ausführungsbeispiel bezieht sich auf Korund als körniges Schleifmittel, es wird aber auch jedes andere harte Material in entsprechender Körnung als Schleifmittel von der Erfindung umfasst.

## Patentansprüche

1. Verfahren zum Entfernen von Schweißspritzern und ähnlichen Verunreinigungen an Schweißbrennern (1) **dadurch gekennzeichnet, dass**
ein körniges Schleifmittel (31) mittels Druckluft durch die Gasdüse in den Schweißbrenner (1) unter rotierender und/oder schwenkender Bewegung eingeblasen wird, wobei die Druckluft der Träger für das körnige Schleifmittel ist.

2. Verfahren nach Anspruch 1 **dadurch gekennzeichnet, dass**
das körnige Schleifmittel (31) bevorzugt Korund ist.

3. Verfahren nach den Ansprüchen 1 und 2 **dadurch gekennzeichnet, dass**
unverbrauchtes körniges Schleifmittel (31) aus der Abluft mittels eines Siebes (22) entfernt und einer erneuten Verwendung zugeführt wird.

4. Verfahren nach den Ansprüchen 1 bis 3 **dadurch gekennzeichnet, dass**
staubförmige Verunreinigungen in der Abluft mittels eines Staubfilters (15) entfernt und dem Prozess entzogen werden.

5. Vorrichtung zum Entfernen von Schweißspritzern und ähnlichen Verunreinigungen an Schweißbrennern (1) nach dem Verfahren von Anspruch 1 **dadurch gekennzeichnet, dass**
ein Gehäuse (2) mit einer schwenkbaren Sicherheitsklappe (12) verschlossen wird, wobei in Sicherheitsklappe (12) eine Öffnung mit einer Abdichtung (11) für den Schweißbrenner (1) angeordnet ist,
unter der Öffnung für den Schweißbrenner (1) eine rotierende und/oder schwenkbare Halterung (6), die eine Strahldüse (4) aufnimmt, angeordnet ist,
Strahldüse (4) mit einem Injektor (5) verbunden ist,
am Injektor (5) eine Druckluftzufuhr und eine Zuführung (9) für ein körniges Schleifmittel (31) angeordnet sind,
unter dem Gehäuse (2) ein zweites Gehäuse (26) angeordnet ist, wobei das Gehäuse (2) an der Verbindungsstelle zum zweiten Gehäuse (26) als ein Trichter (20)
ausgebildet ist und Trichter (20) über einem Sieb (22) endet,
das unter dem Trichter (20) angeordnete zweite Gehäuse (26) einen Vorratsbehälter (25) für das körnige Schleifmittel (31) enthält und
das andere Ende der Zuführung (9) mit dem Vorratsbehälter (25) verbunden ist.

6. Vorrichtung nach Anspruch 5 **dadurch gekennzeichnet, dass**
im unteren Bereich von Gehäuse (2) ein Staubfilter (15) angeordnet ist, der mit einer Absaugvorrichtung (16) zur Beseitigung der staubförmigen Verunreinigungen verbunden ist.

7. Vorrichtung nach einem oder mehreren der Ansprüche 5 und 6 **dadurch gekennzeichnet, dass**
das am Vorratsbehälter (25) eine Sichtscheibe (27) angeordnet ist..

8. Vorrichtung nach einem oder mehreren der Ansprüche 5 und 7 **dadurch gekennzeichnet, dass**
der Vorratsbehälter (25) im zweiten Gehäuse (26) lösbar angeordnet ist.

9. Verfahren nach den Ansprüchen 1- 4 und Vorrichtung zur Durchführung des Verfahrens nach den Ansprüchen 5 - 8 **gekennzeichnet dadurch, dass**
der Schweißbrenner (1) ein Schneidbrenner ist.

## Claims

1. Method for removing welding spatter and similar soiling from welding torches (1), **characterized in that**
a granular abrasive (31) is blown by means of compressed air through the gas nozzle into the welding torch (1) using a rotating and/or pivoting movement, wherein the compressed air is the carrier for the granular abrasive.

2. Method according to Claim 1, **characterized in that**
the granular abrasive (31) is preferably corundum.

3. Method according to Claims 1 and 2, **characterized in that**
unconsumed granular abrasive (31) is removed from the exhaust air by means of a screen (22) and is supplied for renewed use.

4. Method according to Claims 1 to 3, **characterized in that**
dust-like contaminants in the exhaust air are removed by means of a dust filter (15) and are withdrawn from the process.

5. Device for removing welding spatter and similar soiling from welding torches (1) by the method of Claim 1, **characterized in that**
a casing (2) is closed with a pivotable safety flap (12), wherein an opening having a seal (11) for the welding torch (1) is arranged in the safety flap (12),
a rotating and/or pivotable holding means (6) which accommodates a jet nozzle (4) is arranged beneath the opening for the welding torch (1),
the jet nozzle (4) is connected to an injector (5),
a compressed-air supply and a supply line (9) for a granular abrasive (31) are arranged on the injector (5),
a second casing (26) is arranged beneath the casing (2), wherein the casing (2) is embodied as a funnel (20) at the connecting point to the second casing (26), and the funnel (20) ends above a screen (22),
the second casing (26), which is arranged beneath the funnel (20), contains a storage container (25) for the granular abrasive (31), and the other end of the supply line (9) is connected to the storage container (25).

6. Device according to Claim 5, **characterized in that**
a dust filter (15), which is connected to a suction-removal device (16) in order to eliminate the dust-like contaminants, is arranged in the lower region of the casing (2).

7. Device according to either or both of Claims 5 and 6**, characterized in that**
an inspection window (27) is arranged on the storage container (25).

8. Device according to either or both of Claims 5 and 7, **characterized in that**
the storage container (25) is arranged releasably in the second casing (26).

9. Method according to Claims 1-4 and device for carrying out the method according to Claims 5-8, **characterized in that**
the welding torch (1) is a cutting torch.

## Revendications

1. Procédé pour éliminer les éclaboussures de métal et les impuretés similaires sur des chalumeaux de soudage (1), **caractérisé en ce que**
un agent abrasif granulaire (31) est soufflé au moyen d'air comprimé à travers la buse à gaz dans le chalumeau de soudage (1) avec un mouvement rotatif et/ou pivotant, l'air comprimé étant le véhicule de l'agent abrasif granulaire.

2. Procédé selon la revendication 1, **caractérisé en ce que**
l'agent abrasif granulaire (31) est de préférence du corindon..

3. Procédé selon les revendications 1 et 2, **caractérisé en ce que**
l'agent abrasif granulaire (31) non utilisé est éliminé de l'air d'évacuation au moyen d'un tamis (22) et est recyclé en vue d'une nouvelle utilisation.

4. Procédé selon les revendications 1 à 3, **caractérisé en ce que**
des impuretés sous forme de poussière dans l'air d'évacuation sont éliminées au moyen d'un filtre à poussière (15) et sont évacuées du processus.

5. Dispositif pour éliminer les éclaboussures de métal et les impuretés similaires sur des chalumeaux de soudage (1) selon le procédé de la revendication 1, **caractérisé en ce qu'**
un boîtier (2) est fermé avec un volet de sécurité pivotant (12), une ouverture avec un joint d'étanchéité (11) pour le chalumeau de soudage (1) étant prévue dans le volet de sécurité (12),
sous l'ouverture pour le chalumeau de soudage (1) est disposée une fixation (6) rotative et/ou pivotante qui reçoit une buse à jet (4),
la buse à jet (4) est connectée à un injecteur (5),
un apport d'air comprimé et une alimentation (9) pour un agent abrasif granulaire (31) sont disposés au niveau de l'injecteur (5),
sous le boîtier (2) est disposé un deuxième boîtier (26), le boîtier (2) étant réalisé
sous forme d'entonnoir (20) au niveau du point de connexion avec le deuxième boîtier (26), et l'entonnoir (20) se terminant par-dessus le tamis (22),
le deuxième boîtier (26) disposé sous l'entonnoir (20) contient un réservoir (25) pour l'agent abrasif granulaire (31) et
l'autre extrémité de l'alimentation (9) est connectée au réservoir (25).

6. Dispositif selon la revendication 5, **caractérisé en ce que**
dans la région inférieure du boîtier (2) est disposé un filtre à poussière (15) qui est connecté à un dispositif d'aspiration (16) pour éliminer les impuretés sous forme de poussière.

7. Dispositif selon l'une quelconque ou plusieurs des revendications 5 et 6, **caractérisé en ce que**
qu'un regard (27) est prévu sur le réservoir (25).

8. Dispositif selon l'une quelconque ou plusieurs des revendications 5 et 7, **caractérisé en ce que**
le réservoir (25) est disposé de manière amovible dans le deuxième boîtier (26).

9. Procédé selon les revendications 1 à 4 et dispositif pour mettre en oeuvre le procédé selon les revendications 5 à 8, **caractérisé en ce que**
le chalumeau de soudage (1) est un chalumeau de découpage.
